(19) Europäisches Patentamt
European Patent Office
Office européen des brevets

(11) **EP 1 515 501 B1**

(12) **EUROPEAN PATENT SPECIFICATION**

(45) Date of publication and mention
of the grant of the patent:
**02.01.2008   Bulletin 2008/01**

(51) Int Cl.:
**H04L 12/56** *(2006.01)*      **H04L 29/06** *(2006.01)*

(21) Application number: **04300554.5**

(22) Date of filing: **24.08.2004**

(54) **Data structure for range-specified algorithms**

Datenstruktur für bereichspezifizierte Algorithmen

Structure de données pour algorithmes avec étendu spécifié

(84) Designated Contracting States:
**AT BE BG CH CY CZ DE DK EE ES FI FR GB GR HU IE IT LI LU MC NL PL PT RO SE SI SK TR**

(30) Priority: **27.08.2003   US 648791**

(43) Date of publication of application:
**16.03.2005   Bulletin 2005/11**

(73) Proprietor: **Alcatel Lucent**
**75008 Paris (FR)**

(72) Inventors:
• **Damm, Gerard**
**K2A 1Z1, Ottawa (CA)**
• **Bou-Diab, Bashar**
**K1S 2M3, Ottawa (CA)**
• **Wang, Yuke**
**75074, Plano (US)**
• **Tang, Yiyan**
**75080, Richardson (US)**
• **Krishnamurthy, Anand**
**75080, Richardson (US)**
• **Qian, Lie**
**75080, Richardson (US)**
• **Zhang, Yun**
**75080, Richardson (US)**

(74) Representative: **Korakis-Ménager, Sophie**
**Alcatel Lucent**
**Intellectual Property & Standards**
**54 rue La Boétie**
**75008 Paris (FR)**

(56) References cited:
**US-B1- 6 539 394**

• **P GUPTA, N MCKEOWN: "ALGORITHMS FOR PACKET CLASSIFICATION" [Online] 2001, IEEE NETWORK, 2001 , INET , XP002309172 Retrieved from the Internet: URL:http://www.ecse.rpi.edu/ Homepages/shiv kuma/ teaching/sp2001/readings/classificati on_ tutorial_01.pdf> * the whole document ***
• **FELDMANN A ET AL: "TRADEOFFS FOR PACKET CLASSIFICATION" PROCEEDINGS IEEE INFOCOM 2000. THE CONFERENCE ON COMPUTER COMMUNICATIONS. 19TH. ANNUAL JOINT CONFERENCE OF THE IEEE COMPUTER ANDCOMMUNICATIONS SOCIETIES. TEL AVIV, ISRAEL, MARCH 26-30, 2000, PROCEEDINGS IEEE INFOCOM. THE CONFERENCE ON COMPUTER COMMUN, vol. VOL. 3 OF 3. CONF. 19, 26 March 2000 (2000-03-26), pages 1193-1202, XP001044213 ISBN: 0-7803-5881-3***

**Description**

Field Of The Invention

This invention relates to computer-based communications systems and more particularly to data structures that represent sets of intervals for use in range-specified calculations for such systems.

Background Of The Invention

In the general field of computer-based systems, involving multiple and varied work stations located at multiple and diverse sites providing services of differing classification the procedures for controlling data flow are known to be extremely complex.

Typically, data flow is governed by sets of rules which dictate, amongst other things, quality of service, security and metering. The data usually is in the form of packets with a header having particular information such as source, destination and service related criteria. The manner in which the data is handled in the system involves examining the header in relation to these sets of rules. In such an environment, range specified rules become the most viable option to provide an acceptable level of control. This is largely due to the fact that it would be practically impossible to compare all of the data with the sets of rules in a high speed system. Range-specified rules, according to the following description, can be broadly described as a set of rules defined using intervals (or ranges) for each field. The fields can be defined arbitrarily, depending on the applications. A typical example for the fields is the 5-tuple (IP source address, IP destination address, TCP protocol, source port, destination port), but any arrangement of any number of fields is possible, as long as the corresponding data exists in the packets (header and payload) which are going to be matched. The ranges can be thought of as integer intervals, but the invention applies to any set of ordered values on which the concept of interval can be defined. A packet matches a rule if each of its fields (as extracted, or parsed, from the packet) is contained within the corresponding ranges of the rule. If the rule set is ordered top-down, then the best matching rule for a packet is the matching rule closest to the top.

An example of the environment contemplated by the present invention is in an IP router which processes a large number of packets coming from and destined for a large number of user sites. To provide service to end users that is better than "best effort" the system needs to strictly adhere to sets of rules which dictate how data packets are processed. Obviously, taking into consideration the vast volume of traffic in communications systems such as the Internet, it would be difficult to compare each packet with a rule and to determine whether it meets established criteria. Thus the aforementioned range based algorithm can be applied.

For the sake of the following description reference is made to methods of implementing algorithms for multi-field packet classification by range specified rules used in IP routers. Classification is a very important function that is a part of applications such as firewall, Ipsec and Quality of service. Firewall needs to classify packets based on pre-defined set of rules so that it can filter/ block some flow packets from entering the network. IPsec needs to classify packets based on rules so that specific flow packets can be matched to the corresponding security policy and associations that indicate the security algorithms, and secure keys can be applied to the flow packets. Quality of service needs to perform classification function on packets, so that Quality of service attributes like delay bounds, packet loss bounds and bandwidth can be associated with the flow packets. In VPN environments, all the three applications of firewall, IPsec, and Quality of service may have to be applied to the edge router device. Hence, efficient implementation of the classification function becomes even more vital in such environments. Improved classification algorithms can guarantee high-performance with reduced resource requirements for implementation. The capacity of the existing application of the packet classification algorithms can be gracefully enlarged in terms of the computational resources. It will be apparent to one skilled in the art, however, that the algorithms can also apply to other calculations where a range-based or specified subset of rules is used.

As used in this application packet classification is the process of categorizing packets into "flows" in an Internet router based on one or more fields in the packet header. All packets belonging to the same flow obey a predefined rule and are processed in a similar manner by the router. This classification process is used in ACLs (Access Control Lists) for security, QoS, or for Metering for instance.

An algorithm for Multi-field packet classification by range specification takes a rule set and a packet as inputs, finds the best matching rule for the packet in the rule set based on the values of multiple fields in the packet header. A rule set consists of a finite number of rules. Each rule in the rule set contains multiple fields specified by ranges, where a range is an integer interval with a lower bound and an upper bound. Each rule also has a rule number.

A single field of a given rule set is a set of integer intervals. Given a set of integer intervals, a set of elementary intervals and a set of disjoint intervals can be obtained. The elementary intervals break down the set of integer intervals into smaller but necessary elements that are non-overlapping, while the disjoint intervals combine the overlapping integer intervals in the set of integer intervals together to form larger integer intervals that are disjoint to each other.

A matching rule for a given packet satisfies the principle that the value of each field of the packet falls into the value range of the corresponding field of the rule. The best matching rule is the matching rule with the smallest rule number among all the matching rules in the rule set, given the convention that rules are numbered from the highest priority to the lowest priority.

The elementary interval, in addition to its application for packet classification as described above also supports stabbing query. Stabbing query is the type of query where a point data is queried against a set of intervals to determine which of those intervals contains the point. Stabbing query may be used for certain applications, such as IP routing. Data structures for stabbing queries can also be extended to multi-dimension to serve for packet classification in IP routers. As previously described, a packet classification algorithm performs multi-dimensional point query against a set of rules, where the point is multi-dimensional and each rule consists of multiple intervals (ranges).

Given a set of intervals and a point of the stabbing query, the Elementary Interval Tree is used to represent the set of intervals according to one aspect of the invention. Also discussed herein is the Elementary Interval Tree Construction algorithm used to construct the data structure, and the Elementary Interval Tree Query algorithm to perform stabbing query on the data structure.

According to this aspect, given an interval [l, u] with two endpoints: the lower endpoint 1 and the upper endpoint u, the interval contains a point p if $1 \leq p \leq u$. A set of intervals contains a finite number of intervals, where each interval has an identifier. Given a set of intervals, by projecting the endpoints of each interval to a line, the endpoints divide the line into small partitions, called elementary intervals. The elementary intervals break down the set of intervals into smaller but necessary elements that are non-overlapping. The elementary interval tree proposed in the invention is an augmented binary search tree that stores each of the elementary intervals in one node to represent a set of intervals.

Also contemplated by the present invention is the design of a data structure that represents a set of intervals to find maximum disjoint intervals for the set of intervals. Again, this data structure finds application for packet classification in IP routers.

In this aspect an interval [l, u] has two endpoints: lower endpoint $l$ and upper endpoint u. Two intervals $[l_1, u_1]$ and $[l_2, u_2]$ *overlap* if $[l_1, u_1] \cap [l_2, u_2] \neq \varnothing$. A set of intervals contains a finite number of intervals, where each interval also has an identifier. Given a set of intervals, $I = \{I_1, I_2, ...I_n\}$, the set of disjoint intervals of $I$ is defined as $\{\hat{I}_1, \hat{I}_2, ..., \hat{I}_L\}$,

    1.

$$I_1 \cup I_2 \cup ... \cup I_n = \hat{I}_1 \cup \hat{I}_2 \cup ... \cup \hat{I}_L;$$

    2.

$$\forall \hat{I}_a, \hat{I}_b, \, a \neq b, \, \hat{I}_a \cap \hat{I}_b = \varnothing;$$

    3.

$$\forall \hat{I}_l, \, \hat{I}_l = I_1' \cup ... \cup I_K', \, I_k' \in \{I_1, I_2, ..., I_n\}, \, 1 \leq k \leq K;$$

    4.

$$\forall I_i, \, \exists \hat{I}_a, I_i \subseteq \hat{I}_a, \, \forall \hat{I}_b, \hat{I}_b \neq \hat{I}_a, I_i \not\subset \hat{I}_b.$$

The disjoint intervals combine the overlapping intervals in the set of intervals together to form larger intervals that are disjoint to each other.

This data structure could be used to facilitate intersection query as well as stabbing query. Given a set of intervals, the intersection query is to determine which of those intervals overlap a given interval, while the stabbing query is to determine which of those intervals overlap a given point.

Intersection query and stabbing query are important for certain applications, such as IP routing. The data structure proposed here could also be used to facilitate multi-dimensional domains problem, such as packet classification used in IP routers. Packet classification algorithm performs point query against a set of rules, where the point is multi-dimensional and each rule consists of multiple intervals (ranges). Intersection query and stabbing query are also useful for computer graphics, large knowledge-based systems, and some computational geometric problems.

In this aspect, given a set of intervals, the Disjoint Interval Tree represents the set of intervals to facilitate intersection query, stabbing query and packet classification. Also, the Disjoint Interval Tree Construction algorithm is used to construct a disjoint interval tree, and the Disjoint Interval Tree Point Query algorithm is used to perform stabbing query, and the Disjoint Interval Tree Interval Query algorithm is used to perform intersection query.

Prior solutions for indexing intervals to support intersection query and stabbing query include segment tree, interval tree, priority search tree, interval binary search tree, point-range tree, etc. However, no solution has ever been proposed to find disjoint intervals for a given set of intervals.

Prior Art

The prior art solutions respecting the disjoint graph aspect include FIS (Fat Inverted Segment) tree based classification algorithm, Ternary Content Addressable Memory (TCAM) implementation, and classical prefix-based classification algorithms.

The FIS trees based classification algorithm for range-specified rules is one of the prior art solution. The FIS trees for multiple fields of a given rule set is recursively constructed based on the FIS tree for a single field of a give rule set.

The FIS tree is a tree-like data structure to represent a set of integer intervals. The leaf nodes of the FIS tree store the elementary intervals of the set of integer intervals, and all the other nodes beside leaf nodes store the integer interval with the smallest lower bound and the maximum upper bound of all the integer intervals stored in their children. As opposed to the binary tree, the edges in the FIS tree point from child nodes to parent nodes.

Given a rule set based on D fields, the overall FIS trees is a tree containing D layers of $F_j$-FIS trees with one $F_1$-FIS tree in the first layer and a set of $F_j$-FIS trees in the j-th layer, where $F_j$-FIS tree is a modified FIS tree to represent the set of integer intervals belonging to j-th field of a rule set that each node in the $F_j$-FIS tree has an associated rule set. The overall D-layers FIS trees is recursively built by constructing D layer FIS trees. The associated rule set of a node contains rules whose j-th field contains the integer interval stored in the node but does not contain the integer interval stored in the parent node. Except for the first layer, the $F_j$-FIS trees represents the integer intervals in the j-th field of the associated rule sets of the nodes in the $F_{j-1}$-FIS trees. To find the best matching rule for a packet in the overall FIS trees, multiple traversals toward all the possible nodes are required.

Another prior art solution is that of *TCAM (Ternary Content-Addressable Memory)*. TCAM is a specialized hardware that allows parallel pattern matching. TCAM memory arrays store the rules in decreasing order of priorities and compare the input key (packet field) against every element in the array in parallel. The highest priority rule that is matched to the key is returned. TCAMs are faster than software algorithms, but due to the parallel hardware, the magnitude of TCAM power consumption is multiple times higher than that of comparable SRAM based software solution. In comparison the graph based classification approaches are software solutions and rely on graph traversals to find the match to the input key. However, some methods explore the middle ground e.g. work done involves having smaller sized hardware (than TCAM) to do the parallel rule evaluation. These methods employ heuristic algorithms that divide the rule-sets across these hardware units.

Using classical prefix-based classification algorithms is another prior art solution. Through expansion of ranges to replace them with prefixes, classical prefix-based solutions, such as hierarchical-tries based classification algorithm, set-pruning tries based classification algorithm, could also be used to solve the range-based classification problem.

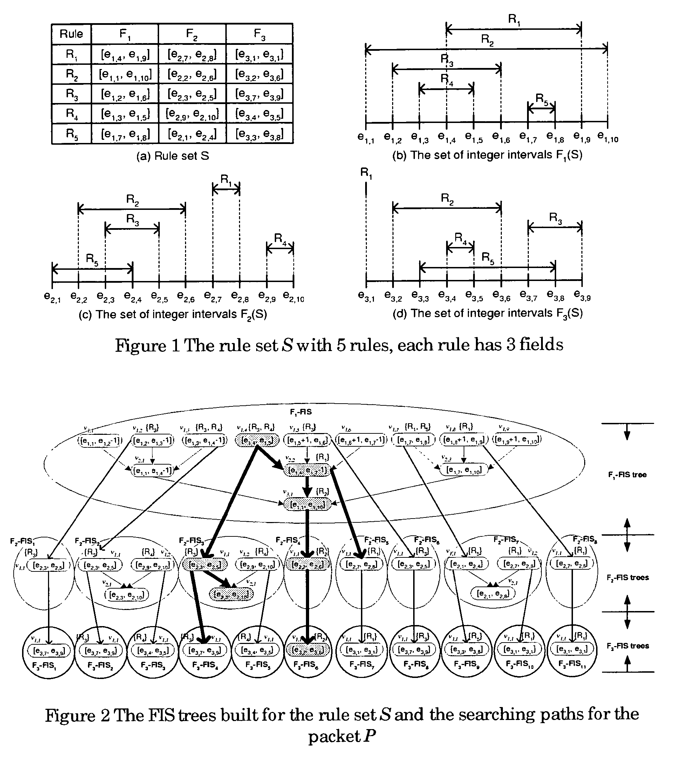

Given a rule set and a packet as inputs, the FIS trees based classification algorithm transforms the rule set into an overall FIS tree and finds the best matching rule for the packet on the overall FIS trees (Figure 2). The problem in FIS trees based classification algorithm is that multiple traversals are required on the overall FIS trees toward all potential nodes containing the best matching rule during search. Multiple traversals are required because, except for the leaf nodes, a node in the overall FIS trees contains the integer intervals of all its children, thus, when a packet falls into the integer interval stored in one node, the search has to be performed on its parents, its parents' parents, and so on. A node can have only one parent in its $F_j$-FIS, but it can have another parent in the next layer $F_j$-FIS (i.e. $F_{j+1}$-FIS). Multiple parents cause multiple paths to be explored.

To overcome this disadvantage, the Disjoint Graph based Classification Algorithm for range-specified rules according to the present invention, is implemented to allow that only a single path be traversed when performing classification for a packet. The disjoint graph based classification algorithm not only reduces the searching time required by the FIS trees based algorithm, but also requires less memory storage and data structure setup time than the FIS trees based algorithm.

The closest prior art with respect to the aforementioned elementary interval tree is the Point-Range tree.

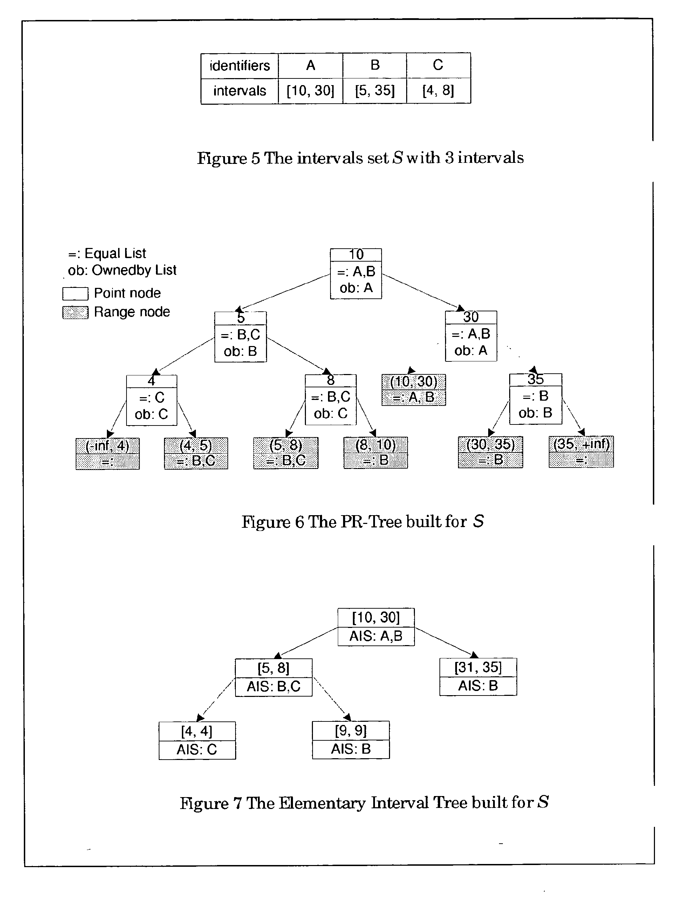

The Point-Range Tree (PR-Tree) is an augmented Binary Search Tree to represent a set of intervals. The PR-Tree (Figure 6) contains two types of nodes: Point nodes and Range nodes. All Point nodes are internal nodes and each Point node has Value, Left, Right, Equal and Ownedby fields. Value is one endpoint of an interval, Left (Right) is a pointer to the left (right) subtree holding values less than (greater than) Value, Equal contains a list of identifiers of intervals that contain Value, and Ownedby contains a list of identifiers of intervals that have Value as an endpoint. All Range nodes are leaf nodes and each Range node has Value1, Value2, and Equal fields. Value1 and Value2 are both an endpoint of an interval, and Equal contains a list of identifiers of intervals that contain the open interval (Value1, Value2).

The PR-Tree allows dynamic insertions and deletions, and could maintain itself balanced by any balanced Binary Tree scheme. A balanced PR-Tree takes $O(\log n)$ time for search. Insertion, deletion, and storage space have worst case requirements of $O(n\log n + m)$, $O(n\log^2 n + m)$, and $O(n\log n)$, respectively, where $n$ is the total number of intervals in the tree, and $m$ is the number of nodes visited during insertion and deletion.

Multiway range search is another solution that uses B-tree to represent a set of intervals, where each node in the B-tree other than the root has $k$ keys and $k+1$ subtrees and the endpoints of the set of intervals are stored as keys in the nodes of the B-tree. The B-tree data structure requires a linear search within each node to find the corresponding subtree.

Prior to PR-Tree, data structures such as Segment Tree, Interval Binary Search Tree, were also proposed to support stabbing query.

Given a set of intervals and a point, the PR-Tree based algorithm transforms the set of intervals to a PR-Tree and finds all intervals that contain the point on the PR-Tree. The problem in PR-Tree is that PR-Tree stores duplicated information that each elementary interval is stored twice: each of the endpoints is stored in a Point node and each elementary interval is stored as an open interval in a Range node. Both Point node and Range node have a list of identifiers of intervals associated with the nodes.

Multiway range search uses B-tree to represent a set of intervals. The B-tree data structure requires a linear search within each node to find the corresponding subtree.

The Elementary Interval Tree of the present invention reduces the memory storage required by PR-Tree by storing each elementary interval only once, which also reduces the insertion and deletion time correspondingly compared to Multiway range search.

The closest prior solution for intersection query is the Interval Tree. An interval tree is an augmented red-black tree that stores each of the intervals in one node to represent a set of intervals. Each node also stores the maximum value of any interval endpoint stored in the subtree rooted at the node.

The Interval Tree allows dynamic insertion and deletion. Both insertion and deletion can be performed in $O(\log n)$ time on an interval tree of $n$ nodes. The storage space is $O(n)$ since the interval tree stores each interval exactly once in the tree. The search time is $O(\log n)$ to find one of the intervals that overlap a given interval. But multiple traversals are required to find all intervals that overlap a given interval.

The closest prior art solution for multi-dimensional domain problem is the method proposed in "Method and system for performing interval-based testing of filter rules" issued in March 25, 2003, U.S. Patent No. 6,539,394. The method disclosed transforms a set of intervals to a set of prefixes, and then constructs a decision tree based on the set of prefixes.

According to the 6,539,394 patent, given a set of intervals and an interval of intersection query, the Interval Tree based algorithm transforms the set of intervals to an Interval Tree and finds one of intervals that overlap the given interval. The problem with the Interval Tree solution is that multiple traversals are required by the Interval Tree to find all intervals that overlap the given interval. The Interval Tree can not be extended to multi-dimensional domains to support packet classification.

Given a set of intervals and a point, the *PR-Tree* based algorithm transforms the set of intervals to a PR-Tree and finds all intervals that contains the given point. The problem in PR-Tree is that PR-Tree stores duplicated information that each open interval stored in the Range node has each of its endpoints being stored in a Point node. The PR-Tree could be extended to support multiple dimensional problems, but need to consume too much memory storage.

The method proposed in U.S. Patent No. 6,539,394 is a static algorithm that needs to reconstruct the decision tree when inserts or deletes of an interval are made to the interval set. Also, it needs large preprocessing time to construct the decision tree.

The Disjoint Interval Tree of the present invention can be used to construct a data structure that requires only a single path traversal to find all intervals that overlap a given interval and requires only half of the storage space compared to PR-Tree.

## Summary of the Invention

According to one aspect of the invention a new tree-like structure is created. The tree-like structure, known as a disjoint graph, enables packet classification in only one pass of the tree.

The disjoint graph is comprised of two new types of data structures: an elementary interval tree (EIT) and a disjoint interval tree (DIT). The disjoint graph is constructed based on a range-specified rule set for classifying packets.

Each rule in the rule set has an equal number of fields, D, and each field specifies a range, referred to as an integer interval, having a lower and an upper bound. The disjoint graph has the same number of layers, D, as there are fields in each rule. The layers are comprised of nodes, and each node has an associated rule set selected from the original (range-specified) rule set.

The first layer of the disjoint graph is an EIT. The remaining layers comprise a set of DITs and a set of EITs. The set of DITs at a given layer are constructed for the integer intervals stored in each node of the EITs in the preceding layer. The set of EITs at a given layer are constructed for the integer intervals stored in each node of the DITs of that layer. The associated rule set of a node of an EIT in aj-th layer contains rules whose j-th field contains the elementary interval stored in the node. The associated rule set of a node of a DIT in aj-th layer contains rules whose j-th field is contained by the disjoint interval stored in the node.

Elementary intervals are non-overlapping integer intervals. Disjoint intervals are intervals formed from overlapping integer intervals by combining them to form integer intervals that are disjoint from each other.

In accordance with a first aspect of the present invention there is provided a method of classifying as indicated in claim 1.

Prior solutions for indexing intervals to support intersection query and stabbing query include segment tree, interval tree, priority search tree, interval binary search tree, point-range tree, etc. However, no solution has ever been proposed to find disjoint intervals for a given set of intervals.

Brief Description Of The Drawings

The invention will now be described in greater detail with reference to the attached drawings wherein:

Figure 1 illustrates a basic rule set with five rules, each rule having three fields;

Figure 2 shows a FIS tree built for the rule set of Figure 1;

Figure 3 illustrates the construction of DITs and EITs;

Figure 4 shows a disjoint graph constructed for the rule set of Figure 1;

Figure 5 shows an interval set S with three intervals;

Figure 6 illustrates a PR-Tree built for the set of Figure 5;

Figure 7 illustrates the EIT built for the set of Figure 5;

Figure 8 illustrates an interval set S with five intervals;

Figure 9 shows an interval Tree built for the set of Figure 8;

Figure 10 is a PR-Tree built for the set of Figure 8;

Figure 11 is a decision tree built for the set of Figure 8;

Figure 12a is a DIT for the set of Figure 8; and

Figure 12b is an EIT for the set of Figure 8.

Detailed Description of the Invention

In accordance with the present invention, given a rule set and a packet, a Disjoint Graph based Classification Algorithm is presented. The algorithm includes the Disjoint Graph to represent the rule set to support packet classification, the Disjoint Graph Construction algorithm to transform the rule set into a disjoint graph, and the Disjoint Graph Search algorithm to find the best matching rule for the packet on the disjoint graph.

The Disjoint Graph data structure for a given rule set with D fields in each rule has D layers. Each node in the disjoint graph has an associated rule set. The first layer of the disjoint graph is an elementary interval tree (EIT) constructed for the set of integer intervals belonging to the first field of rules in the rule set. Besides the first layer, the j-th layer of the disjoint graph consists of a set of disjoint interval trees ($F_j$-DITs) and a set of elementary interval trees ($F_j$-EITs). The set of $F_j$-DITs are constructed for the integer intervals stored in each node of the $F_{j-1}$-EITs in the (j-1)-th layer. The set of $F_j$-EITs are constructed for the integer intervals stored in each node of the $F_j$-DITs in the j-th layer.

The disjoint graph is constructed based on two structures: Elementary Interval Tree (EIT) and Disjoint Interval Tree (DIT). Given a set of integer intervals, its elementary intervals and disjoint intervals can be represented by trees, which are called the elementary interval tree and disjoint interval tree. Each node in EIT (DIT) stores one of the elementary (disjoint) intervals of the set of integer intervals. The components of the disjoint graph, $F_j$-EIT and $F_j$-DIT enhance the EIT and DIT by setting an associated rule set (ARS) to each node of EIT and DIT. The associated rule set of a node in $F_j$-EIT contains rules whose j-th field contains the elementary interval stored in the node, while the associated rule set of a node in $F_j$-DIT contains rules whose j-th field is contained by the disjoint interval stored in the node.

The EIT component alone would be enough to construct a data structure that satisfies the requirement of a single path to be traversed to find the best matching rule for a packet by constructing EITs for the associated rule set of the nodes of the constructed EIT until no more EIT can be constructed. However, duplicated sub-EITs will be constructed in such data structure when the associated rule sets of the nodes in one EIT are overlapping with each other. These duplicated sub-EITs are redundant and should be shared to save storage space for the data structure. Unfortunately, duplicated sub-EITs may not be shared by two EITs if the sub-EIT is in the "middle" of an EIT. Thus, DITs are constructed to enable the sharing of the duplicated sub-EITs.

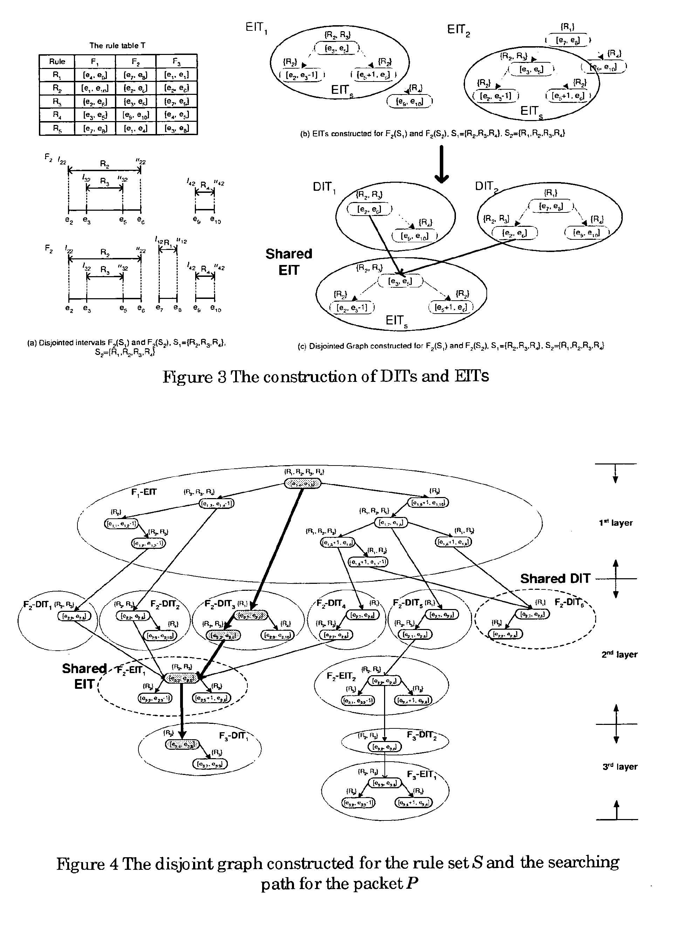

For example, Figure 3 is the example of DIT and EIT construction. Figure 3.c shows that two EITs have a duplicated sub-EIT, but they can't share the duplicated sub-EITs since the sub-EIT is in the "middle" of both EITs. But when we create a DIT for each EIT, we can use the DITs to replace the original EITs and let the two DITs share a single sub-EIT.

Figure 4 is the Disjoint Graph $G$ constructed for the set of rules $S$ with 3 fields given in Figure 1. $G$ has 3 layers: 1) layer 1 contains one $F_1$-EIT constructed for the rule set $S$; 2) layer 2 contains six $F_2$-DITs for associated rule sets of nodes in the $F_1$-EIT and two $F_2$-EITs constructed for associated rule sets (ARSs) of nodes in the six $F_2$-DITs, because there are six different ARSs whose sizes are greater than 1 in the $F_1$-EIT and two different ARSs whose sizes are greater than 1 in the six $F_2$-DITs; 3) layer 3 contains two $F_3$-DITs constructed for ARSs of nodes in the two $F_2$-EITs and one $F_3$-EIT constructed for ARSs of nodes in the two $F_3$-DITs, because there are two different ARSs whose sizes are greater than 1 in the two $F_2$-EIT and two different ARSs whose sizes are greater than 1 in the two $F_3$-DITs.

The Disjoint Graph Construction algorithm takes a rule set $S$ with $N$ rules and $D$ fields as input, and returns a disjoint graph $G$ as output.

Input: rule set $S=\{R_1,...,R_N\}$, where $R_i=\{F_{i1},F_{i2},...,F_{iD}\}$, $i\in[1,N]$.

Output: disjoint graph $G$.

Disjoint Graph Construction Algorithm ($S$)

Step 1. Construct the first layer of the disjoint graph $G$
Construct an $F_1$ - EIT for integer interval $F_1$ (S) using the EITC algorithm
Step 2. Construct the $k$-th layer of the disjoint graph $G$, $k \in [2, D]$

    1. Construct a $F_k$ - DIT in the $k$-th layer for each node of $F_{k-1}$ - EIT in the ($k$ - 1)-th layer and connect the node to the root of the newly constructed $F_k$- DIT

        a. Given a node $v$ with an associated rule set $S_v$ of an $F_{k-1}$- EIT in the ($k$ - 1) -th layer, construct a $F_k$ - $DIT_v$, for the set of integer intervals $F_k$ ($S_v$) using the DITC algorithm, connect $v$ to the root of $F_k$ - $DIT_v$. If $S_v$ has only one rule, directy associate the rule to $v$;
        b. If the associated rule set $S_{v'}$ of another node $v'$ is the same as $S_v$, , then $F_k$ - $DIT_v$ is shared by $v$ and $v'$ , and node $v'$ is also connected to the root of $F_k$ - $DIT_v$ ;
        c. Repeat a to c to construct $F_k$ - DIT s for all the nodes in the $F_{k-1}$ - EIT s.

    2. Construct a $F_k$ - EIT in the $k$-th layer for each node in the $F_k$ - DIT s in the $k$-th layer and connect the node to the root of the newly constructed $F_k$ - EIT

        a. Given a node $v$ with an associated rule set $S_v$ of an $F_k$ - DIT in the $k$-th layer, construct an $F_k$ - $EIT_v$, for the set of integer intervals $F_k$ ($S_v$) using the EITC algorithm, connect $v$ to the root of $F_k$ - $EIT_v$. If $S_v$ has only one rule, directy associate the rule to $v$;
        b. If the associated rule set $S_{v'}$ of another node $v'$ is the same as $S_v$, then $F_k$ - $EIT_v$ is shared by $v$ and $v'$ , and node $v'$ is also connected to the root of $F_k$ - $EIT_v$ ;
        c. Repeat a to c to construct $F_k$ - EIT s for all the nodes in the $F_k$ - DIT s.
    Repeat Step 2 until the $D$ -th layer of the disjoint graph $G$ is constructed.

The Disjoint Graph Search algorithm takes a disjoint graph $G$ constructed by disjoint graph construction algorithm and a packet $P$ as inputs, and returns the best matching rule of $P$ as output.

Disjoint Graph Search Algorithm ($G$, $P$)

The search starts from the root of the $F_1$ - EIT tree in the first layer of the $G$.

    Step 1. Search the $F_k$ - EIT s in the $k$ -th layer of $G$, $k \in [1, D]$
    The search performed on the node $v$ of the $F_k$ - EIT with the associated rule set $S_v$ and integer interval $\tilde{I}_v = [\tilde{I}_v, \tilde{u}_v]$

can be divided in three cases:

Case 1: $f_k < \tilde{l}_v$

Perform search on the left child of $v$ if the left child exists. If the left child does not exist, there is no matching rule for $P$ in $G$.

Case 2: $f_k > \tilde{u}_v$.

Perform search on the right child of $v$ if the right child exists. If the right child does not exist, there is no matching rule for $P$ in $G$.

Case 3: $\tilde{l}_v \leq f_k \leq \tilde{u}_v$

Perform search on $F_{k+1} - DIT_v$ in the $(k+1)$-th layer if the $F_{k+1} - DIT_v$ exists. If $F_{k+1} - DIT_v$ does not exists, the best matching rule of $P$ is the rule has the smallest rule number in $S_v$.

Step 2. Search the $F_{k+1} - DIT_v$ in the $(k+1)$-th layer of $G$, $k \in [1, D-1]$

The search performed on the node $v$ of the $F_{k+1} - DIT_v$ with the associated rule set $S_v$ and integer interval $\hat{I}_v = [\hat{l}_v, \hat{u}_v]$ can be divided in three cases:

Case 1: $f_{k+1} < \hat{l}_v$

Perform search on the left child of $v$ if the left child exists. If the left child does not exist, there is no matching rule for $P$ in $G$.

Case 2: $f_{k+1} > \hat{u}_v$

Perform search on the right child of $v$ if the right child exists. If the right child does not exist, there is no matching rule for $P$ in $G$.

Case 3: $\hat{l}_v \leq f_{k+1} \leq \hat{u}_v$

Perform search on $F_{k+1} - EIT_v$ in the $(k+1)$-th layer if the $F_{k+1} - EIT_v$, exists. If $F_{k+1} - EIT_v$ does not exists, the best matching rule of $P$ is the rule has the smallest rule number in $S_v$.

The Disjoint Graph based classification algorithm requires only a single path to be traversed when perform the classification for a packet, thus reduces the searching time required by the FIS trees based classification algorithm. In addition, since identical EITs (DITs) are constructed only once, the building time and the storage space are saved.

Also, in accordance with the invention, given a set of intervals and a point, the Elementary Interval Tree is presented to represent the set of intervals to support stabbing query, the Elementary Interval Tree Construction algorithm to construct the set of intervals to an elementary interval tree, and the Elementary Interval Tree Query algorithm to perform stabbing query on the elementary interval tree to find all intervals that contain a given point.

Given a set of intervals $I = \{I_1, I_2, .... I_n\} = \{[l_1, u_1,], [l_2, u_2], ..., [l_n, u_n]\}$, the set of elementary *intervals* of $I$ is defined as $\{\tilde{l}_1, \tilde{l}_2, ..., \tilde{l}_k\}$:

1. Put all lower bounds and upper bounds of $I$ into an array $E$, $E = \{l_1, u_1, ..., l_u, u_n\}$;
2. Sort $E$ in ascending order, delete duplicated elements, denote $E$ as $E = \{e_1, ..., e_K\}$, $e_1 < e_2 < ... < e_K$, $1 \leq K \leq 2n$;
3. $\tilde{I}_k \subseteq [e_k, e_{k+1}] \subseteq I_i$, $1 \leq k \leq K - 1$, iff $(e_k \notin U$ or $e_{k+1} \notin L)$, $1 \leq i \leq n$; (two successive elementary bounds $e_k$ and $e_{k+1}$ define an elementary interval, unless the first bound $e_k$ is an upper bound and the second bound $e_{k+1}$ is a lower bound)
4.

$$I_1 \cup I_2 \cup ... \cup I_n = \tilde{I}_1 \cup \tilde{I}_2 \cup ... \cup \tilde{I}_{K-1};$$

5.

$$\forall \tilde{I}_a, \tilde{I}_b, \; a \neq b, \; \tilde{I}_a \cap \tilde{I}_b = \varnothing.$$

For example, given a set of intervals (Figure 5) {[10, 30], [5, 35], [4, 8]}, the elementary intervals are {[4, 4], [5, 8], [9, 9], [10, 30], [31, 35]}.

The Elementary Interval Tree is an augmented binary search tree that stores each of the elementary intervals in one node to represent a set of intervals. Each node in the elementary interval tree has *LB, UB, Left, Right,* and *AIS* fields, where *LB* and *UB* are lower and upper endpoint of an elementary interval, respectively, *Left* and *Right* are pointers to left and right subtree, respectively, and *AIS* (Associated Interval Set) is a list of identifiers of intervals that contain the elementary interval stored in the node.

The Elementary Interval Tree Construction (EITC) algorithm takes a set of intervals $I = \{I_1, I_2,...,I_n\}$ as input, and returns an elementary tree *EIT* as output.

Elementary Interval Tree Construction Algorithm ($I$)

Step 1: Create the root node *V* for EIT

1. Store the integer interval $I_V = [l_V, u_V] = [l_1, u_1]$ in *V* ;
2. Store the list of identifiers of intervals $AIS_V = \{I_1\}$ in *V* ;
3. Remove $I_1$ from *I* , $I I = I - I_1$.

Step 2: Insert $I_i = [l_i, u_i]$, $i \in [2, n]$ , to the EIT

1. Compare $I_i$ to $I_V$

Case 1: $u_i < l_V$
If the left child node of *V* does not exist, $v_L = \varnothing$, create $v_L$ store $I_i$ in $v_L$ and add $I_i$ to AIS of $v_L$.
If $v_L \neq \varnothing$, recursively insert $I_i$ to the left sub-EIT with the root $v_L$.
Case 2: $l_i > u_V$
If the right child node of *V* dose not exist, $v_R = \varnothing$, create $v_R$, store $I_i$ in $v_R$ and add $I_i$ to AIS of $v_R$.
If $v_R \neq \varnothing$, recursively insert $I_i$ to the right sub-EIT with the root $v_R$.
Case 3: $I_i \cap I_V \neq \varnothing$
$I_L = [min(u_i , u_v), max(l_i, l_v)-1]$
$I_R = [min(u_i, u_V) + 1, max(u_i, u_V)]$
$I_V = [l_V, u_V] = [max(l_i, l_V), min(u_i, u_V)]$
Insert integer intervals $I_L$ and $I_R$ to EIT

If $I_L \neq \varnothing$
If $v_L = \varnothing$, create $v_L$, store $I_L$ in $v_L$;
If $v_L \neq \varnothing$, recursively insert $I_L$ to the left sub-EIT with
the root $v_L$.
If $I_R \neq \varnothing$
If $v_R = \varnothing$, create $v_R$, store $I_R$ in $v_R$ ;
If $v_R \neq \varnothing$, recursively insert $I_R$ to the right sub-EIT with
the root $v_R$.

2. Remove $I_i$ from *I*, $I = I - I_i$
Repeating Step 2 until $I = \varnothing$

The Elementary Interval Tree Query (EITQ) algorithm takes the elementary interval tree *EIT* constructed for a set of intervals by EITC algorithm and a point *P* as inputs, and returns a list of identifiers of intervals that contains *P* as output.

Elementary Interval Tree Query Algorithm (*EIT*, *P*)
Start from the root node *V* of *EIT*

Case 1. If $l_V \leq P \leq u_V$, return $AIS_v$;
Case 2. If $P < l_V$, recursively search the left sub-EIT rooted at the left child node of *V* , $v_L$ ;
Case 3. If $P > u_V$, recursively search the right sub-EIT rooted at the right child node of *V* , $v_R$ ;
Case 4. If the *EIT* is empty, return NULL.

The Elementary Interval Tree contains only the Range nodes in the PR-Tree, thus it consumes only half of the memory storage required by the PR-Tree. The Elementary Interval Tree allows dynamic insertion (Step 2 of EITC algorithm) and deletion, while maintaining the tree balanced as well as the PR-Tree. Any balanced binary tree scheme could be used to perform the tree balancing operation on elementary interval tree. The balanced Elementary Interval Tree keeps the searching time as $O(\log n)$ and reduces the worst case insertion time to $O(n\log n)$, where *n* is the total number of intervals.

The advantages of the Elementary Interval Tree are: 1) reduction of the memory storage required by the PR-Tree to half, 2) reduction of the insertion and deletion time compared with the PR-Tree.

Given a set of intervals *S* shown in Figure 5, Figure 6 is the PR-Tree constructed for *S*, and Figure 7 is the Elementary Interval Tree built for *S*.

The commercial value of the Elementary Interval Tree lies in the role as solution to stabbing queries, which is a necessary element in applications such as IP routers. Furthermore, the extension of Elementary Interval Tree to multiple dimensional domains provides a solution to packet classification in IP routers. Classification is a very important function that is a part of applications such as firewall, IPsec, Quality of service. Firewall needs to classify packets based on pre-defined set of rules so that it can filter/ block some flow packets from entering the network. IPsec needs to classify packets based on rules so that specific flow packets can be matched to the corresponding security policy and associations that indicate the security algorithms, secure keys to be applied to the flow packets. Quality of service needs to perform classification function on packets, so that Quality of service attributes like delay bounds, packet loss bounds, bandwidth can be associated with the flow packets. In VPN environments, all the three applications of firewall, IPsec, and Quality of service may have to be applied to the edge router device. Hence, efficient implementation of the classification function becomes even more vital in such environments.

Given a set of intervals, the Disjoint Interval Tree represents a set of intervals to facilitate queries such as stabbing query and intersection query, the Disjoint Interval Tree Construction algorithm transforms a set of intervals to a disjoint interval tree and thus to find the disjoint intervals for the set of intervals, the Disjoint Interval Tree Point Query algorithm performs stabbing query on the disjoint interval tree, and the Disjoint Interval Tree Interval Query algorithm performs intersection query on the disjoint interval tree.

Given a set of intervals, $I = \{I_1, I_2,...I_n\}$, the set of *disjoint intervals* of $I$ is defined as $\{\hat{I}_1, \hat{I}_2,..., \hat{I}_L\}$,

1.

$$I_1 \cup I_2 \cup ... \cup I_n = \hat{I}_1 \cup \hat{I}_2 \cup ... \cup \hat{I}_L;$$

2.

$$\forall \hat{I}_a, \hat{I}_b, \, a \neq b, \, \hat{I}_a \cap \hat{I}_b = \varnothing;$$

3.

$$\forall \hat{I}_l, \, \hat{I}_l = I_1' \cup ... \cup I_K', \, I_k' \in \{I_1, I_2,..., I_n\}, \, 1 \leq k \leq K;$$

4.

$$\forall I_i, \, \exists \hat{I}_a, I_i \subseteq \hat{I}_a, \, \forall \hat{I}_b, \hat{I}_b \neq \hat{I}_a, I_i \not\subset \hat{I}_b.$$

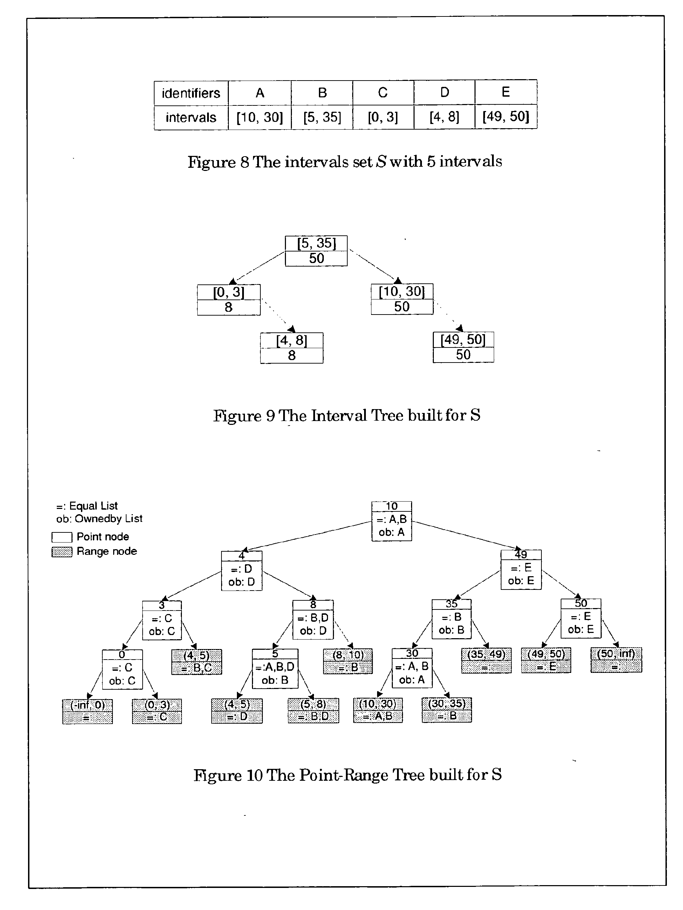

The disjoint intervals combine the overlapping intervals in the set of intervals together to form larger intervals that are disjoint to each other. For example, given a set of intervals {[10, 30], [5, 35], [0, 3], [4, 8], [49, 50]} (Figure 8), the disjoint intervals are {[0, 3], [4, 35], [49, 50]}.

The Disjoint Interval Tree is a binary search tree that stores each of the disjoint intervals in one node to represent a set of intervals. Each node in the disjoint interval tree has *LB, UB, Left*, *Right,* and *AIS* fields, where *LB* and *UB* are lower and upper endpoints of a disjoint interval, respectively, *Left* and *Right* are pointers to left and right subtree, respectively, and *AIS* (Associated Interval Set) is a list of identifiers of intervals that is contained by the disjoint interval stored in the node.

The Disjoint Interval Tree Construction (DITC) algorithm takes a set of intervals $I = \{I_1, I_2,...,I_n\}$ as input and returns a disjoint interval tree *DIT* as output.

Disjoint Interval Tree Construction Algorithm (*I*)

Step 1: Create the root node V for DIT

1. Store the integer interval $I_1 = [l_1, u_1,]$ in $V$, $I_V = [l_V, u_V] = [l_1, u_1]$
2. Store the list of identifiers of intervals $AIS_V = \{I_1\}$ in $V$;
3. Remove $I_1$ from $I$, $I = I - I_1$

Step 2: Insert $I_i = [l_i, u_i]$, $i \in [2, n]$, to the DIT

1. Compare $I_i$ and $I_V$.

Case 1: $u_i < l_V$.
If the left child node of $V$ does not exist, $v_L = \varnothing$, create $v_L$, store $I_i$ in $v_L$ and add $I_i$ to AIS of $v_L$.
If $v_L \neq \varnothing$ recursively insert $I_i$ to the left sub-DIT with the root $v_L$.
Case 2: $I_i > u_V$.
If the right child node of $V$ does not exist, $v_R = \varnothing$, create $v_R$, store $I_i$ in $v_R$ and add $I_i$ to AIS of $v_R$.
If $v_R \neq \varnothing$, recursively insert $I_i$ to the right sub-DIT with the root $v_R$.
Case 3: $I_i \cap I_V \neq \varnothing$.
If $I_i < I_V$ and there exist children $lcv$ on the left of $v$ that verify the condition $u_{lcv} \geq l_i$ and *leftmostcv* is one of these children that is most to the left; then 1) discard these children; 2) set $l_v = l_{leftmostlcv}$; 3) connect $I_V$ to the leftover DIT sub-tree on the left
If $I_i < I_V$ and there are no children $lcv$ on the left of $v$ that verify the condition $u_{lcv} \geq l_i$, then set $l_v = li$
If $u_i > u_V$, and there exist children $rcv$ on the right of $v$ that verify the condition $l_{rev} \leq u_i$, and *rightmostcv* is one of these children that is most to the right; then 1) discard these children; 2) set $u_v = u_{rightmostcv}$; 3) connect $I_V$ to the leftover DIT sub-tree on the right
If $u_i > u_V$ and there are no children $rcv$ on the right of $v$ that verify the condition $l_{rcv} \leq u_i$, then set $u_v = u_i$

$$I_V = [l_V, u_V]$$

2. Remove $I_i$ from I, $I = I - I_i$
Repeat Step 2 until $I = \varnothing$

The Disjoint Interval Tree Point Query (DITPQ) algorithm takes the disjoint interval tree *DIT* constructed for a set of intervals by DITC algorithm and a point $P$ as inputs, and returns a list of identifiers of intervals that might contain $P$ as output.
Disjoint Interval Tree Point Query Algorithm (*DIT*, *P*)
Start from the root node *V* of *DIT*

Case 1. If $l_V \leq P \leq u_V$, return $AIS_V$;
Case 2. If $P < l_V$, recursively search the left sub-DIT rooted at the left child node of $V$, $v_L$;
Case 3. If $P > u_V$, recursively search the right sub-DIT rooted at the right child node of $V$, $v_R$;
Case 4. If the *DIT* is empty, return NULL.

The Disjoint Interval Tree Interval Query (DITIQ) algorithm takes the disjoint interval tree DIT constructed for a set of intervals by DITC algorithm and an interval [$l$, $u$] as inputs, and returns a list of identifiers of intervals that might overlap [$l$, $u$] as output.
Disjoint Interval Tree Interval Query Algorithm (*DIT*, *l*, *u*)
Start from the root node *V* of *DIT*

Case 1. If $[l,u] \cap [l_V, u_V] \neq \varnothing$, return $AIS_V$;
Case 2. If $u < l_V$, recursively search the left sub-DIT rooted at the left child node of $V$, $v_L$;
Case 3. If $l > u_{VV}$, recursively search the right sub-DIT rooted at the right child node of $V$, $v_R$;
Case 4. If the *DIT* is empty, return NULL.

The Disjoint Interval Tree allows dynamic insertion while the closest prior art solution proposed in U.S. Patent No. 6,539,394 does not support dynamic insertion as shown in next paragraph. And the disjoint interval tree is able to maintain balance by any balanced binary tree scheme.

The disjoint interval tree can be used with other data structures such as Elementary Interval Tree to form a data structure to support intersection query, stabbing query, packet classification, etc. For example, after constructing the disjoint interval tree, it is possible to construct an elementary interval tree for each associated rule set in the disjoint interval tree. The data structure formed by balanced disjoint interval tree and balanced elementary interval trees takes $O(\log n)$ time for intersection query or stabbing query. To find all intervals that overlap a given interval, DITIQ algorithm could be used to find the set of intervals that are possible to overlap the given interval and then the set of intervals that overlap the given interval can be quickly found in the small size interval set. Similarly, to find all intervals that contain a given point, DITPQ algorithm could be used to find the set of intervals that are possible to contain the given point.

Here the differences of the DIT as compared with the method proposed in U.S. Patent No. 6,539,394 are apparent. The method is a static algorithm that needs to reconstruct the decision tree when inserts or deletes an interval from the interval set.

Given a set of intervals $I = \{l_1, l_2,...l_n\}= \{[l_1, u_1], [l_2, u_2],....,[l_n, u_n]\}$, the method performs the following operations:

1) Puts all lower endpoints $\{l_1, l_2,...,l_n\}$ to an array, sorts them in ascending order and deletes duplicated elements to result a set of endpoints $\{le_1, le_2,...,le_i\}$, $i \leq n$ , and uses the set of endpoints to form a set of intervals $LE=\{[0,le_1), [le_1,le_2),[le_2,le_3),...[le_i, max)\}$,where $|LE|= i+1$ and $max$ is the maximum possible. For example, given a set of intervals $\{[1,3],[4,5],[2,8]\}$, we get the interval set $LE = \{[0,1), [1,2), [2,4), [4, max)\}$;

2) Performs the same operation on the upper endpoints $\{u_1,u_2,..., u_n\}$ to get a set of intervals $UE=\{(0,0],(0,ue_1],(ue_1, ue_2],...,(ue_j, max]\}$, where $j \leq n$, and $|UE|= j+2$;

3) For the interval set $LE$ , uses $w_1 =^{\lceil} \log |LE|^{\rceil}$ bits to label each interval of the interval set starting from all 0's for the first interval. For example, intervals in $([0,1), [1,2), [2,4), [4, max)\}$ will be labeled as 00 for [0,1), 01 for [1,2), 10 for [2,4), and 11 for [4, max);

4) Labels each interval in the interval set $UE$ using $w_2 =^{\lceil} \log | UE |^{\rceil}$ bits;

5) Builds a $n$ x $(w_1+w_2)$ matrix M for the set of intervals $I$, one row for each interval and $(w_1+w_2)$ elements for each row: 1) gets the bit labels of all intervals in $LE$ that are contained by the interval, keeps the common bits of these intervals and set other bits to wildcard * to get a $w_1$ bits prefix, and 2) gets a $w_2$ bits prefix for the interval similarly based on the interval set $UE$. For example, the interval [2, 8] contains intervals [2,4),[4,max) in $LE$ that are labeled as 10 and 11 respectively, which results 1*;

6) Constructs a decision tree based on the matrix M:

a) Choose the column having a minimal number of wildcards and if more than one such column, choose the lowest index column having the closest equal number of '1's and '0's, and this column will be the first node of the decision tree;

b) Derives two matrices from M by eliminating the rows having '0's and '1's, respectively, in the selected column, and by eliminating the selected column from the new matrices;

c) Recursively selects columns from the matrices and creates nodes until the decision tree is built, that the given intervals are distinguished from each other.

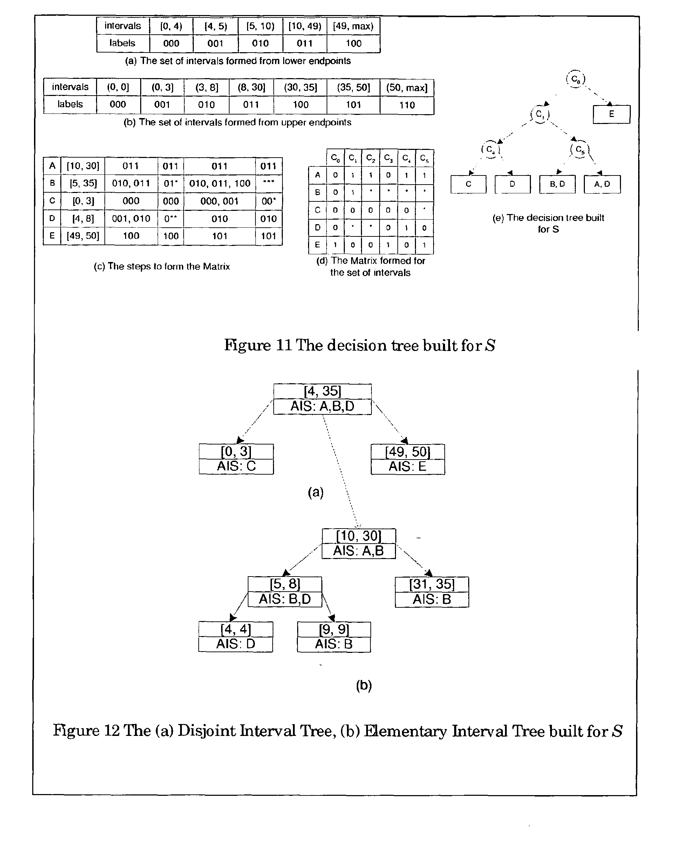

An example of the decision tree built for the set of intervals in Figure 8 is given in Figure 11.

Although particular embodiments of the invention have been described and illustrated it will be apparent to one skilled in the art that numerous changes can be made without departing from the basic concepts. For example, the treelike data structures for creating the disjoint graph, as well as the EIT and DIT can be stored on a computer readable medium for packet classification. It is to be understood, however, that such changes will fall within the full scope of the invention as defined by the appended claims.

**Claims**

**1.** A method of classifying, in a high speed system, a data packet belonging to multi-dimensional data traffic, using rules applied to data in specified fields of headers of the data packets, a rule being designed using a set of intervals for values assumed in data belonging to various fields of the headers, each rule in the rule set having an equal number D of fields, the method comprising:

transforming the sets of intervals into a tree-like disjoint graph DG with D layers, each node in the DG having an associated rule set, where the first layer of said DG in an elementary interval tree, EIT, constructed for the set of intervals belonging to the first field of rules in the rule set, and besides the first layer, the j-th layer of the DG consists of a set of disjoint interval trees, DIT, *(F_j-DITs)* and a set of EITs *(F_j-EITs)*, the set of *F_j*-DITs being constructed for the intervals stored in each node of the $F_{j-1}$-EITs in the *(j-1)*-th layer and the set of $F_j$-EITs being constructed for the intervals stored in each node of the $F_j$-DITs in the *j*-th layer,

wherein a DIT is a representation of a set of disjoint intervals $\{\hat{I}_1, \hat{I}_2, ..., \hat{I}_L\}$ as an augmented binary search tree storing each of the disjoint intervals $\{\hat{I}_1, \hat{I}_2, ..., \hat{I}_L\}$ in one node;

wherein a set of disjoint intervals $\{\hat{I}_1, \hat{I}_2, ..., \hat{I}_L\}$ is formed from a given set of intervals $\{I_1, I_2, ... I_n\}$ so that:

- the combination of all disjoint intervals $\{\hat{I}_1, \hat{I}_2, ..., \hat{I}_L\}$ correspond to the combination of all overlapping intervals $\{I_1, I_2, ... I_n\}$:

$$I_1 \cup I_2 \cup ... \cup I_n = \hat{I}_1 \cup \hat{I}_2 \cup ... \cup \hat{I}_L;$$

- any two disjoint intervals are disjoint from each other: $\forall \hat{I}_a, \hat{I}_b, a \neq b, \hat{I}_a \cap \hat{I}_b = \varnothing$ ;

- any disjoint interval being the combination of some of overlapping intervals:

$$\forall \hat{I}_l, \hat{I}_l = I'_1 \cup ... \cup I'_K, I'_k \in \{I_1, I_2, ..., I_n\}, 1 \leq k \leq K;$$

- any overlapping interval being included in only one of the disjoint intervals: $\forall I_i, \exists \hat{I}_a, \hat{I}_i \subseteq \hat{I}_a, \forall \hat{I}_b, \hat{I}_b \neq \hat{I}_a, \hat{I}_i \not\subset \hat{I}_b$;

wherein an EIT is a representation of a set of elementary intervals as an augmented binary search tree storing each of the elementary intervals in one node;

wherein a set of elementary intervals is formed from a given set of intervals $\{I_1, I_2, ... I_n\}$ by breaking down said set of intervals into smaller non-overlapping intervals; and

conducting a point query of the DG to find which set of intervals the packet belongs.

2. The method according to claim 1 wherein creating an EIT, from a set of intervals comprises:

projecting end points of each interval of the set of intervals onto a line, the end point dividing the line into non-overlapping elementary intervals;

forming the EIT such that each node of the tree contains a single elementary interval, an indication of original intervals associated with the elementary intervals and pointers to any adjacent nodes in the tree.

3. The method according to claim 1 wherein the point query is performed using an intersection query.

4. The method according to claim 2 wherein the intersection query is implemented by a Disjoint Interval Tree Interval Query algorithm.

5. The method according to any one of claims 1 to 3 wherein the point query is performed using a stabbing query.

6. The method according to claim 4 wherein the stabbing query is implemented by a Disjoint Interval Tree Point Query algorithm.

7. The method according to claim 1 for use in an IP router.


**Patentansprüche**

1. Ein Verfahren der Klassifizierung eines Datenpakets in einem Hodhgeschwindigkeitssystem, das zum mehrdimensionalen Datenverkehr gehört, unter Verwendung von Regeln, die auf Daten in spezifizierten Felder der Header der Datenpakete angewendet sind, einer Regel, die unter Verwendung einer Menge von Intervallen für Werte entworfen ist, die in Daten angenommen sind, die zu verschiedenen Feldern der Header gehören, wobei jede Regel in der Regelmenge eine gleiche Anzahl D von Feldern aufweist, das Verfahren umfaßt:

Transformieren der Menge von Intervallen in einen baumähnlichen disjunkten Graphen DG mit D Schichten, wobei jeder Knoten im DG eine zugeordnete Regelmenge aufweist, wo die erste Schicht des DG in einem Elementar-Intervall-Baum EIT, der für die Menge von Intervallen aufgebaut ist, die zum ersten Feld der Regeln in der Regelmenge gehören, und außer der ersten Schicht die j-te Schicht des DG aus einer Menge von disjunkten Intervallbäumen DIT ($F_j$-DITs) und einer Menge von EITs ($F_j$-EITs) zusammengesetzt ist, die Menge der $F_j$-DITs für die Intervalle aufgebaut wird, die in jedem Knoten der $F_{j-1}$-ETTs in der (j-1)-ten Schicht gespeichert sind, und die Menge der {$F_j$-EITs für die Intervalle aufgebaut wird, die in jedem Knoten der $F_j$-DITs in der j-ten Schicht gespeichert sind,

in welchem ein DIT eine Darstellung einer Menge von disjunkten Intervallen $\{\hat{I}_1, \hat{I}_2,...\hat{I}_L\}$ als ein vergrößerter binärer Suchbaum ist, der jedes disjunkte Intervall $\{\hat{I}_1, \hat{I}_2, ... \hat{I}_L\}$ in einem Knoten speichert;

in welchem eine Menge von disjunkten Intervallen $\{\hat{I}_1, \hat{I}_2,... \hat{I}_L\}$ aus einer gegebenen Menge von Intervallen $I = \{I_1,I_2,...,I_n\}$

- die Kombination aller disjunkten Intervalle $\{\hat{I}_1, \hat{I}_2,....\hat{I}_L\}$ der Kombination aller überlappenden Intervalle $I = \{I_1, I_2,..., I_n\}$ entspricht :
- jede zwei disjunkte Intervalle disjunkt voneinander sind: $\forall \hat{I}_a, \hat{I}_b, a \neq b, \hat{I}_a \cap \hat{I}_b = \varnothing$
- jedes disjunkte Intervall die Kombination einiger überlappender Intervalle ist : $\forall \hat{I}_1, \hat{I}_1 = I_1 \cup...\cup I_K, I_k \in \{I_1, I_2,...,I_n\}, 1 \leq k \leq K$;
- jedes überlappende Intervall in nur einem der disjunkten Intervalle eingeschlossen ist : $\forall I_i, \exists \hat{I}_a, I_1, \subseteq \hat{I}_a, \forall \hat{I}_b, \hat{I}_b \neq \hat{I}_a, \hat{I}_i \not\subset \hat{I}_b$ ;

in welchem ein EIT eine Darstellung einer Menge von elementaren intervallen als ein vergrößerter binärer Suchbaum ist, der jedes elementare Intervall in einem Knoten speichert ;

in welchem eine Menge von elementaren Intervallen aus einer gegebenen Menge von Intervallen $\{I_1, I_2,.....,I_n\}$ durch Teilen der Menge der Intervalle in kleinere nichtüberlappende Intervalle gebildet wird; und Durchführen einer Punktabfrage des DG, um herauszufinden, zu welcher Menge von Intervallen das Paket gehört.

2. Das Verfahren nach Anspruch 1, in welchem das Erstellen eines EIT aus einer Menge von Intervallen umfaßt: Projizieren der Endpunkte jedes Intervalls der Menge von Intervallen auf eine Linie, wobei, der Endpunkt die Linie in nichtüberlappende elementare Intervalle teilt ; Bilden des EIT, so daß jeder Knoten des Baums ein einzelnes elementares Intervall beinhaltet, eine Anzeige der ursprünglichen Intervalle, die mit den elementaren Intervallen und Zeigern auf alle angrenzenden Knoten im Baum verbunden sind.

3. Das Verfahren nach Anspruch 1, in welchem die Punktabfrage unter Verwendung einer Schnittmengenabfrage durchgeführt wird.

4. Das Verfahren nach Anspruch 2, in weichem die Schnittmengenabfrage durch einen Disjoint Interval Tree Point Query-Algoritmus implementiert wird.

5. Das Verfahren nach jedem der Ansprüche bis 3, in welchem die Punktabfrage unter Verwendung einer scharfen Abfrage durchgeführt wird.

6. Das Verfahren nach Anspruch 4, in welchem die scharfe Abfrage durch einen Disjoint Interval Tree Point Query-Algorithmus implementiert wird.

7. Das Verfahren nach Anspruch 1 zur Verwendung in einem IP-Router.

**Revendications**

1. Procédé de classement, dans un système à grande vitesse, d'un paquet de données appartenant à un trafic de données multidimensionnelles, à l'aide de règles appliquées à des données dans des champs spécifiés d'en-têtes des paquets de données, une règle étant conçue à l'aide d'un ensemble d'intervalles pour des valeurs supposées dans des données appartenant à divers champs des en-têtes, chaque règle dans l'ensemble de règles ayant un nombre égal D de champs, le procédé comprenant:

la transformation des ensembles d'intervalles en un graphe disjoint de type arbre DG avec D couches, chaque noeud dans le DG ayant un ensemble de régles associé, où la première couche dudit DG dans un arbre d'intervalles élémentaires, EIT, construit pour l'ensemble d'intervalles appartenant au premier champ de régles dans l'ensemble de règles, et en plus de la première couche, la j-ième couche du DG consiste en un ensemble d'arbres d'intervalles disjoints. DIT, ($F_j$-DIT) et un ensemble d'EIT ($F_j$-EIT), l'ensemble des $F_j$-DIT étant construit pour les intervalles stockés dans chaque noeud des $F_{j-1}$-EIT dans la ($j$-1)-ième couche et l'ensemble des $F_j$-EIT étant construit pour les intervalles stockés dans chaque noeud des $F_j$-DIT dans la $j$-ième couche,

dans lequel un DIT est une représentation d'un ensemble d'intervalles disjoints $\{\hat{I}_1, \hat{I}_2,..., \hat{I}_L\}$ comme un arbre de recherche binaire augmenté stockant chacun des intervalles disjoints $\{\hat{I}_1, \hat{I}_2,...\hat{I}_L\}$ dans un noeud ;

dans lequel un ensemble d'intervalles disjoints $\{\hat{I}_1, \hat{I}_2,...\hat{I}_L\}$ est formé à partir d'un ensemble donné d'intervalles $\{I_1, I_2...I_n\}$ de sorte que :

la combinaison de tous les intervalles disjoints $\{\hat{I}_1, \hat{I}_2,...\hat{I}_L\}$ correspond à la combinaison de tous les intervalles chevauchants $\{I_1, I_2,..., I_n\}$ :

$$ I_1 \cup I_2 \cup ... \cup I_n = \hat{I}_1 \cup \hat{I}_2 \cup ... \cup \hat{I}_L \; ; $$

-deux intervalles disjoints quelconques sont disjoints l'un de l'autre

$$ \forall \hat{I}_a, \hat{I}_b, a \neq b, \hat{I}_a \cap \hat{I}_b = \varnothing \; ; $$

- un intervalle disjoint quelconque étant la combinaison de certains des intervalles chevauchants : $\forall \hat{I}_1$, $\hat{I}_1 = I'_1 \cup ... \cup I'_K$, I'$_k$ 0 $\{I_1, I_2....I_n\}$, $1 \leq k \leq K$ ;

- un intervalle chevauchant quelconque étant compris dans seulement un des intervalles disjoints : $\forall I_n \; \exists \; \hat{I}_3, I_i \subseteq \hat{I}_a, \forall \hat{I}_b, \hat{I}_b \neq \hat{I}_a, I_1 \not\subset \hat{I}_b$;

dans lequel un EIT est une représentation d'un ensemble d'intervalles élémentaires comme un arbre de recherche binaire augmenté stockant chacun des intervalles élémentaires dans un noeud ;

dans lequel un ensemble d'intervalles élémentaires est formé à partir d'un ensemble donné d'intervalles $\{I_1, I_2...I_n\}$ en décomposant ledit ensemble d'intervalles en des intervalles non chevauchants plus petits; et

la conduite d'une interrogation de point du DG pour trouver auquel ensemble d'intervalles le paquet appartient.

2. Procédé selon la revendication 1, dans lequel la création d'un EIT, à partir d'un ensemble d'ïntervalles comprend :

la projection de points d'extrémité de chaque interne de l'ensemble d'intervalles sur une ligne, le point d'extrémité divisant la ligne en des intervalles élémentaires non chevauchants ;

la formation, de l'EIT de telle sorte que chaque noeud de l'arbre contient un intervalle élémentaire unique, une indication des intervalles d'origine associés aux intervalles élémentaires et aux pointeurs vers des noeuds quelconques adjacents dans l'arbre.

3. Procédé selon la revendication 1, dans lequel l'interrogation de point est réalisée à l'aide d'une interrogation d'intersection.

4. Procédé selon la revendication 2, dans lequel l'interrogation d'intersection est mise en oeuvre par un algorithme d'interrogation d'intervalles d'arbre d'intervalles disjoints.

5. Procédé selon l'une quelconque des revendications 1 à 3, dans lequel l'interrogation de point est réalisée à l'aide d'une interrogation de piquage.

6. Procédé selon la revendication 4, dans lequel l'interrogation de piquage est mise en oeuvre par un algorithme d'interrogation de points d'arbre d'intervalles disjoints.

7. Procédé selon la revendication 1 destiné à une utilisation dans un routeur IP.

| Rule | $F_1$ | $F_2$ | $F_3$ |
|------|-------|-------|-------|
| $R_1$ | $[e_{1,4}, e_{1,9}]$ | $[e_{2,7}, e_{2,8}]$ | $[e_{3,1}, e_{3,1}]$ |
| $R_2$ | $[e_{1,1}, e_{1,10}]$ | $[e_{2,2}, e_{2,6}]$ | $[e_{3,2}, e_{3,6}]$ |
| $R_3$ | $[e_{1,2}, e_{1,6}]$ | $[e_{2,3}, e_{2,5}]$ | $[e_{3,7}, e_{3,9}]$ |
| $R_4$ | $[e_{1,3}, e_{1,5}]$ | $[e_{2,9}, e_{2,10}]$ | $[e_{3,4}, e_{3,5}]$ |
| $R_5$ | $[e_{1,7}, e_{1,8}]$ | $[e_{2,1}, e_{2,4}]$ | $[e_{3,3}, e_{3,8}]$ |

(a) Rule set S

(b) The set of integer intervals $F_1(S)$

(c) The set of integer intervals $F_2(S)$

(d) The set of integer intervals $F_3(S)$

Figure 1 The rule set $S$ with 5 rules, each rule has 3 fields

Figure 2 The FIS trees built for the rule set $S$ and the searching paths for the packet $P$

Figure 3 The construction of DITs and EITs

Figure 4 The disjoint graph constructed for the rule set S and the searching
path for the packet P

| identifiers | A | B | C |
|---|---|---|---|
| intervals | [10, 30] | [5, 35] | [4, 8] |

Figure 5 The intervals set S with 3 intervals

=: Equal List
ob: Ownedby List

☐ Point node
▨ Range node

Figure 6 The PR-Tree built for S

Figure 7 The Elementary Interval Tree built for S

| identifiers | A | B | C | D | E |
|---|---|---|---|---|---|
| intervals | [10, 30] | [5, 35] | [0, 3] | [4, 8] | [49, 50] |

Figure 8 The intervals set S with 5 intervals

Figure 9 The Interval Tree built for S

Figure 10 The Point-Range Tree built for S

| intervals | [0, 4) | [4, 5) | [5, 10) | [10, 49) | [49, max) |
|---|---|---|---|---|---|
| labels | 000 | 001 | 010 | 011 | 100 |

(a) The set of intervals formed from lower endpoints

| intervals | (0, 0] | (0, 3] | (3, 8] | (8, 30] | (30, 35] | (35, 50] | (50, max] |
|---|---|---|---|---|---|---|---|
| labels | 000 | 001 | 010 | 011 | 100 | 101 | 110 |

(b) The set of intervals formed from upper endpoints

| A | [10, 30] | 011 | 011 | 011 | 011 |
|---|---|---|---|---|---|
| B | [5, 35] | 010, 011 | 01* | 010, 011, 100 | *** |
| C | [0, 3] | 000 | 000 | 000, 001 | 00* |
| D | [4, 8] | 001, 010 | 0** | 010 | 010 |
| E | [49, 50] | 100 | 100 | 101 | 101 |

(c) The steps to form the Matrix

|  | $C_0$ | $C_1$ | $C_2$ | $C_3$ | $C_4$ | $C_5$ |
|---|---|---|---|---|---|---|
| A | 0 | 1 | 1 | 0 | 1 | 1 |
| B | 0 | 1 | . | . | . | . |
| C | 0 | 0 | 0 | 0 | 0 | . |
| D | 0 | . | . | 0 | 1 | 0 |
| E | 1 | 0 | 0 | 1 | 0 | 1 |

(d) The Matrix formed for
the set of intervals

(e) The decision tree built
for S

Figure 11 The decision tree built for $S$

(a)

(b)

Figure 12 The (a) Disjoint Interval Tree, (b) Elementary Interval Tree built for $S$

## EP 1 515 501 B1

**REFERENCES CITED IN THE DESCRIPTION**

**Patent documents cited in the description**

- US 6539394 B